# EUROPÄISCHE PATENTSCHRIFT

(11) **EP 0 657 820 B1**
(45) Veröffentlichungstag und Bekanntmachung des Hinweises auf die Patenterteilung: **28.07.1999**
(21) Anmeldenummer: 94118960.7
(22) Anmeldetag: 01.12.1994
(51) Int. Cl.: G06F 12/14, G06F 1/00

(54) **Verfahren zum Verhindern einer unberechtigten Datenänderung bei einer Vorrichtung mit einem nichtflüchtigen Speicher**
Method for preventing unauthorised data modification in an apparatus with a non-volatile memory
Méthode pour empêcher la modification des données non autorisées dans un dispositif avec une mémoire non-volatile

(30) Priorität: 08.12.1993 DE 4341887
(43) Veröffentlichungstag der Anmeldung: 14.06.1995
(73) Patentinhaber: SIEMENS AKTIENGESELLSCHAFT, 80333 München (DE)
(72) Erfinder: Pockrandt, Wolfgang, Dipl.-Phys., D-85293 Reichertshausen (DE); Schrenk, Hartmut, Dr.rer.nat., D-85540 Haar (DE)

(56) Entgegenhaltungen:
- EP-A- 0 449 255
- EP-A- 0 540 095

## Beschreibung

Die Erfindung betrifft ein Verfahren zum Verhindern der unberechtigten Datenänderung bei einer Vorrichtung mit einem nichtflüchtigen Speicher, einer zentralen Recheneinheit sowie einem der zentralen Recheneinheit zugeordneten Programmspeicher.

Bei der Verwendung einer solchen Vorrichtung in einer Chipkarte repräsentieren die im nichtflüchtigen Speicher abgelegten Daten in vielen Anwendungen einen Wert, häufig auch einen Geldwert. Es besteht daher das Risiko einer unberechtigten oder unbeabsichtigten Datenänderung.

Datenänderungen in einem nichtflüchtigen Speicher, welcher bei Chipkarten vom EPROM- oder EEPROM-Typ ist, erfolgen üblicherweise durch Aktivierung einer Ablaufsteuerung oder eines Programmierprogrammes, mit der oder dem nach geeigneter Vorbelegung von Registern der Beginn und das Ende der Datenänderung veranlaßt wird.

Probleme entstehen zum einen durch Störungen der Betriebsbedingungen der Vorrichtung, die einen parasitären Datenänderungsvorgang beispielsweise während der Einschaltphase, solange Betriebsspannungen oder Frequenzen nicht stabil sind, auslösen können. Zum anderen sind, insbesondere bei Chipkarten, auch Manipulationen an den Programmen selbst zu berücksichtigen.

Schutzfunktionen gegen unerwünschte Operationen in einem nichtflüchtigen Speicher werden üblicherweise dadurch realisiert, daß innerhalb des Anwenderprogrammes vor Durchführung einer Speicheroperation Blockaden eingerichtet sind, die erst nach einer Überprüfung von Berechtigungen beseitigt werden. Solche Blockadefunktionen lassen sich softwaremäßig unter Verwendung des nichtflüchtigen Speichers flexibel kontrollieren und verwalten. Die Kontrolle funktioniert aber nur solange, wie das Datenänderungsprogramm ungestört ablaufen kann. Werden jedoch durch absichtliche oder unabsichtliche Störungen Sprünge im Programmablauf verursacht, so ist eine fehlerhafte Datenänderung nicht mehr auszuschließen. Wirksamer wäre gegen dieses Risiko ein zusätzlicher, immer wirksamer physikalischer Schutz in bestimmten Adressbereichen des nichtflüchtigen Speichers, wie sie bei Speicherkarten mit fester Logik bestens erprobt sind, z.B. durch Fusible Links zur Aktivierung einer Sperrlogik für vorgegebene Adressbereiche. Eine feste Blockadelogik ist in einem Standard-Prozessorchip jedoch unerwünscht, da sie die flexible Nutzung in unterschiedlichen Anwendungen behindert.

Aus dem Dokument EP-A-0 540 095 wird ein Verfahren zum Verhindern unberechtigten Datenveränderungen eines nichtflüchtigen Speichers beschrieben, wobei ein im Software implementierter Zieladressbereichvergleich sowie ein durch das Setzen eines Kontrollregisters realisierter physikalischer Schutz offengelegt werden um einen unberechtigten Zugriff auf den nichtflüchtigen Speicher zu verhindern.

Das Problem vorliegender Erfindung besteht somit darin, ein Verfahren zum Verhindern einer unberechtigten Datenänderung bei einer Vorrichtung mit einem nichtflüchtigen Speicher anzugeben, bei dem einerseits die Flexibilität einer Software-Lösung und andererseits annähernd die Funktionssicherheit einer Hardware-Lösung gegeben ist.

Das Problem wird durch ein Verfahren gemäß dem Anspruch 1 gelöst.

Bei dem erfindungsgemäßen Verfahren wird vor der Überprüfung einer Erlaubnis für eine Datenänderung in einem Speicherbereich des nichtflüchtigen Speichers, was beispielsweise durch die Abfrage einer Geheimnummer geschehen kann, ein Kontrollbit in einem Kontrollregister gesetzt. Nach der Überprüfung der Erlaubnis und vor der Datenänderung selbst wird dann geprüft, ob das Kontrollbit gesetzt wurde. Ein ungewollter oder unberechtigter Einsprung in das Datenänderungsprogramm erst nach der Erlaubnisüberprüfung kann somit zu keiner Datenänderung führen, da das Kontrollbit nicht gesetzt ist. Wird jedoch durch einen Sprung in das Datenänderungsprogramm das Kontrollbit gesetzt, so muß auch die anschließende Erlaubnisüberprüfung durchlaufen werden. Es besteht somit eine sehr hohe Sicherheit vor einer Datenänderung durch falschen Einsprung in das Datenänderungsprogramm, da durch das Setzen des Kontrollbits eine hardwaremäßige Sperre vorgenommen wird.

Damit das Kontrollbit nicht auf irgendeine Weise gesetzt werden kann, um einen Einsprung in das Datenänderungsprogramm nach der Erlaubnisüberprüfung zu ermöglichen, müssen die zum Setzen des Kontrollbits nötigen Befehle in einem definierten Adressbereich des Datenänderungsprogrammes stehen und das Kontrollregister muß vor dem Setzen des Kontrollbits prüfen, ob die Befehle zum Setzen aus diesem definierten Adressbereich kommen.

Die Erfindung soll nachfolgend anhand eines Ausführungsbeispiels mit Hilfe von Figuren näher erläutert werden. Dabei zeigen
- Fig. 1: ein Prinzipschaltbild einer Vorrichtung zum Betreiben des erfindungsgemäßen Verfahrens und
- Fig. 2: ein Flußdiagramm des erfindungsgemäßen Verfahrens.

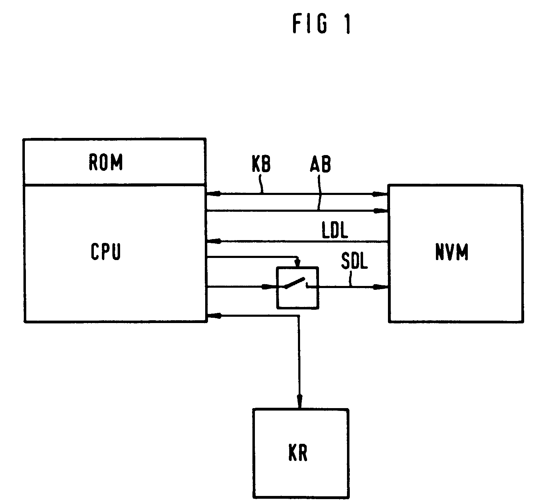

Das Prinzipschaltbild gemäß Fig. 1 zeigt eine zentrale Recheneinheit CPU, der ein Programmspeicher ROM zugeordnet ist. Die zentrale Recheneinheit CPU steuert über einen Kontrollbus KB und einen Adressbus AB einen nichtflüchtigen Speicher NVM an. Über eine Lesedatenleitung LDL können Daten aus dem nichtflüchtigen Speicher NVM von der zentralen Recheneinheit CPU gelesen werden. Es können aber Daten nur über eine von der zentralen Recheneinheit CPU ansteuerbare Sperrlogikschaltung SL mittels einer Schreibdatenleitung SDL in den nichtflüchtigen Speicher NVM übertragen werden. Die Aktivierung der Sperrlogikschaltung SL erfolgt in Abhängigkeit von dem Zustand eines mit der zentralen Recheneinheit CPU verbundenen Kontrollregisters KR.

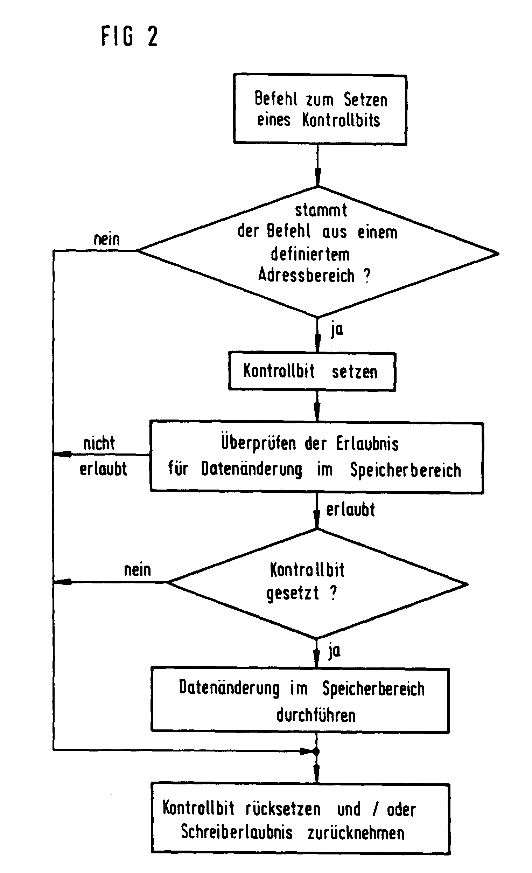

Fig. 2 zeigt den Ablauf einer Datenänderung in einem Speicherbereich des nichtflüchtigen Speichers. Zuerst wird in der zentralen Recheneinheit ein Kontrollbit im Kontrollregister gesetzt. Dabei überprüft das Kontrollregister vor dem Setzen des Kontrollbits, ob der Setzbefehl aus einem definierten Adressbereich des Datenänderungsprogramms kommt. Es wird also vor dem Ausführen des Setzbefehls die Berechtigung zum Geben eines Befehls überprüft. Dann findet eine Überprüfung der Erlaubnis für eine Datenänderung in einem Speicherbereich.des nichtflüchtigen Speichers statt. Wenn die Datenänderung nicht erlaubt ist, wird das Kontrollbit zurückgesetzt und das Verfahren beendet, ist die Datenänderung jedoch erlaubt, wird überprüft, ob ein Kontrollbit gesetzt ist. Erst wenn diese Überprüfung positiv verläuft, können Daten auf herkömmliche Weise im nichtflüchtigen Speicher durch die zentrale Recheneinheit geändert werden. Wenn das Kontrollbit nicht gesetzt ist, wird die Datenänderungserlaubnis zurückgenommen und das Verfahren beendet.

## Patentansprüche

1. Verfahren zum Verhindern der unberechtigten Datenänderung bei einer Vorrichtung mit einem nichtflüchtigen Speicher (NVM), einer zentralen Recheneinheit (CPU) sowie einem der zentralen Recheneinheit (CPU) zugeordneten Programmspeicher (ROM) mit folgenden Schritten:
- Geben eines Befehls zum Setzen eines Kontrollbits in einem mit der zentralen Recheneinheit ansteuerbaren Kontrollregister (KR) von einem Programm zum Ändern der Daten in einem Speicherbereich des nichtflüchtigen Speichers (NVM),
- Überprüfen, ob dieser Befehl aus einem definierten Adressbereich des Datenänderungsprogramms stammt,
- wenn der Befehl aus dem definierten Adressbereich stammt, Ausführen des Befehls durch Setzen des Kontrollbits im Kontrollregister (KR),
- Überprüfen einer Erlaubnis für eine Datenänderung in einem Speicherbereich des nichtflüchtigen Speichers (NVM),
- wenn die spezielle Erlaubnis gegeben ist, Überprüfen, ob das Kontrollbit gesetzt ist,
- wenn ein Kontrollbit gesetzt ist, Ändern der Daten im Speicherbereich,
- Rücksetzen des Kontrollbits im Kontrollregister (KR) und Zurücknehmen der Schreiberlaubnis, sowohl nach einer erlaubten Datenänderung als auch, wenn eine Datenänderung nicht erlaubt war oder wenn kein Kontrollbit gesetzt wurde.

2. Anwendung eines Verfahrens gemäß Anspruch 1 bei einer Chipkarte.

## Claims

1. Method of preventing unauthorized data modification in a device having a non-volatile memory (NVM), a central processing unit (CPU) and a program memory (ROM) assigned to the central processing unit (CPU) having the following steps:
- giving an instruction to set a control bit in a control register (KR), which can be driven by the central processing unit, by a program for modifying the data in a memory range of the non-volatile memory (NVM),
- checking whether this instruction originates from a defined address range of the data modification program,
- if the instruction does originate from the defined address range, carrying out the instruction by setting the control bit in the control register (KR),
- checking for permission for a data modification in a memory range of the non-volatile memory (NVM),
- if the special permission is given, checking whether the control bit is set,
- if a control bit is set, modifying the data in the memory range,
- resetting the control bit in the control register (KR) and revoking the write permission, both after an allowed data modification and if a data modification has not been allowed or if no control bit was set.

2. Application of a method according to Claim 1 to a smart card.

## Revendications

1. Méthode pour empêcher la modification non autorisée de données dans un dispositif comportant une mémoire non volatile (NVM), une unité de calcul centrale (CPU) ainsi qu'une mémoire de programme (ROM) associée à l'unité de calcul centrale (CPU), comprenant les étapes suivantes :
- instruction pour activer un bit de contrôle dans un registre de contrôle (KR) commandable par l'unité de calcul centrale, donnée par un programme de modification des données dans une zone de mémoire de la mémoire non volatile (NVM),
- vérifier si cette instruction provient d'une zone d'adresse définie du programme de modification des données,
- si l'instruction provient de la zone d'adresse définie, exécution de l'instruction en activant le bit de contrôle dans le registre de contrôle (KR),
- vérifier l'autorisation pour une modification des données dans une zone de mémoire de la mémoire non volatile (NVM),
- si l'autorisation spéciale est donnée, vérifier si le bit de contrôle est activé,
- si un bit de contrôle est activé, modification des données dans la zone de mémoire,
- mise à zéro du bit de contrôle dans le registre de contrôle (KR) et annulation de l'autorisation d'écriture, non seulement après une modification autorisée des données mais aussi lorsqu'une modification des données n'était pas autorisée ou lorsqu'aucun bit de contrôle n'a été activé.

2. Application d'une méthode selon la revendication 1 à une carte à puce.
